# EUROPÄISCHE PATENTSCHRIFT

(11) **EP 1 537 341 B1**
(45) Veröffentlichungstag und Bekanntmachung des Hinweises auf die Patenterteilung: **18.03.2009**
(21) Anmeldenummer: 03766308.5
(22) Anmeldetag: 25.07.2003
(51) Int. Cl.: F16D 65/21, F16D 55/226, F16D 66/00

(54) **BETÄTIGUNGSEINHEIT FÜR EINE ELKTROMECHANISCH BETÄTIGBARE SCHEIBENBREMSE**
ACTUATION UNIT FOR AN ELECTROMECHANICALLY-ACTUATED DISC BRAKE
UNITE D'ACTIONNEMENT D'UN FREIN A DISQUE A COMMANDE ELECTROMAGNETIQUE

(30) Priorität: 26.07.2002 DE 10234335; 05.03.2003 DE 10309831
(43) Veröffentlichungstag der Anmeldung: 08.06.2005
(73) Patentinhaber: Continental Teves AG & Co. oHG, 60488 Frankfurt am Main (DE)
(72) Erfinder: LINHOFF, Paul, 61267 Neu-Anspach (DE); SCHACK, Peter, 63500 Seligenstadt (DE); VÖLKEL, Jürgen, 60389 Frankfurt (DE); POHLMANN, Andreas, 65760 Eschborn (DE); GÖRLACH, Johannes, 35428 Langgöns (DE)
(86) Internationale Anmeldenummer: PCT/EP2003/008252
(87) Internationale Veröffentlichungsnummer: WO 2004/013513

(56) Entgegenhaltungen:
- EP-A- 0 916 867
- WO-A-98/27357
- WO-A-99/45292
- DE-A- 10 148 472
- DE-C- 19 629 936

## Beschreibung

Die Erfindung betrifft eine Betätigungseinheit für eine elektromechanisch betätigbare Scheibenbremse für Kraftfahrzeuge, die an einem Bremssattel angeordnet ist, in dem zwei mit je einer Seitenfläche einer Bremsscheibe zusammenwirkende Reibbeläge begrenzt verschiebbar angeordnet sind, wobei einer der Reibbeläge mittels eines Betätigungselementes durch die Betätigungseinheit direkt und der andere Reibbelag durch die Wirkung einer vom Bremssattel aufgebrachten Reaktionskraft mit der Bremsscheibe in Eingriff bringbar ist, wobei die Betätigungseinheit aus einem Elektromotor sowie einem wirkungsmäßig zwischen dem Elektromotor und dem Betätigungselement angeordneten Untersetzungsgetriebe besteht, das durch einen Gewindetrieb gebildet ist, der von einem sich am Bremssattel oder einem mit dem Bremssattel verbundenen Getriebegehäuse axial abstützenden Führungsteil aufgenommen wird.

Eine derartige elektromechanische Betätigungseinheit ist aus der internationalen Patentanmeldung WO 99/45292 Al bekannt. Der genannten Veröffentlichung sind jedoch keine Hinweise auf die Messung der Reaktionskraft zu entnehmen.

Es ist daher Aufgabe der vorliegenden Erfindung, eine elektromechanische Betätigungseinheit der eingangs genannten Gattung vorzuschlagen, bei der unter Verwendung kostengünstiger technischer Mittel ein Ermitteln der bei der Betätigung entstehenden Reaktionskraft möglich ist. Außerdem soll eine platzsparende, kompakte Bauweise der elektromechanischen Betätigungseinheit erreicht werden.

Diese Aufgabe wird erfindungsgemäß dadurch gelöst, dass zwischen dem Führungsteil und dem Bremssattel bzw. dem mit dem Bremssattel verbundenen Getriebegehäuse eine Sensoreinrichtung vorgesehen ist, die die aus der von der Betätigungseinheit aufgebrachten Betätigungskraft resultierende Reaktionskraft erfasst, wobei die Sensoreinrichtung einerseits mit dem Getriebegehäuse und andererseits mit dem Führungsteil formschlüssig derart verbunden ist, dass eine axiale Sicherung der Sensoreinrichtung im Getriebegehäuse erfolgt und wobei die Sensoreinrichtung Mittel zur radialen Führung des Führungsteiles aufweist.

Bei einer weiteren Ausgestaltung der Erfindung ist die Sensoreinrichtung durch einen ringförmigen Halter gebildet, an dessen Umfang drei Druckmesselemente gleichmäßig verteilt angeordnet sind. Der ringförmige Halter besteht vorzugsweise aus Kunststoff.

Eine besonders vorteilhafte Ausgestaltung des Erfindungsgegenstandes sieht vor, dass die Druckmesselemente quaderförmig ausgeführt sind und Dehnungsmessflächen aufweisen, die in einer zur Richtung der Reaktionskrafteinleitung senkrecht verlaufenden Ebene angeordnet sind.

Eine einfach realisierbare, zuverlässig arbeitende Betätigung der erfindungsgemäßen Betätigungseinheit wird nach einem weiteren Erfindungsmerkmal dadurch erreicht, dass der ringförmige Halter Kontaktierungsmittel zur Kontaktierung der Dehnungsmessflächen aufweist.
Dabei werden die Kontaktierungsmittel durch ein vom Kunststoff umspritztes Stanzgitter gebildet, das eine Übertragung elektrischer Signale ermöglicht und das durch Dünndrahtbonden mit den Dehnungsmessflächen verbunden ist.

Eine besonders kompakt bauende Ausführung des Erfindungsgegenstandes ergibt sich aus der Lehre der Unteransprüche 10 und 11, wonach der ringförmige Halter mit einem elektrischen Stecker zum Anschließen der Dehnungsmessflächen versehen ist, der eine Auswerteelektronik umfassen kann.

Eine hohe Genauigkeit des vom Kraftsensor erzeugten Messsignals wird bei einer weiteren Ausgestaltung der Erfindung dadurch erreicht, dass die Dehnungsmessflächen in einer Vollbrücke geschaltet sind.

Schließlich wird die eingangs gestellte Aufgabe der Erfindung durch eine Ausführung gelöst, bei der sich am Führungsteil eine Spindel des Gewindetriebs unter Zwischenschaltung eines Axiallagers abstützt, indem ein Lagerring des Axiallagers als Bestandteil einer Sensoreinrichtung ausgeführt (ausgebildet) ist, die zur Erfassung der aus der von der Betätigungseinheit aufgebrachten Betätigungskraft resultierenden Reaktionskraft vorgesehen ist.

Die Erfindung wird in der nachfolgenden Beschreibung von zwei Ausführungsbeispielen unter Bezugnahme auf die beiliegende Zeichnung näher erläutert. In der Zeichnung zeigen:
- Fig. 1: eine Ausführung der erfindungsgemäßen, elektromechanischen Betätigungseinheit im Axialschnitt,
- Fig. 2, 2a: stark vereinfachte Schnittdarstellungen der Einbausituation des Kraftsensors bei der Betätigungseinheit gemäß Fig. 1,
- Fig. 3: die Einbausituation des Kraftsensors in einer teilweise geschnittenen Explosionsdarstellung,
- Fig. 4: den Kraftsensor in einer Perspektivdarstellung,
- Fig. 5 und 6: eine andere Ausführung der erfindungsgemäßen elektromechanischen Betätigungseinheit in der Ausgangs- sowie in der betätigten Stellung in einer sehr vereinfachten Axialschnittdarstellung.

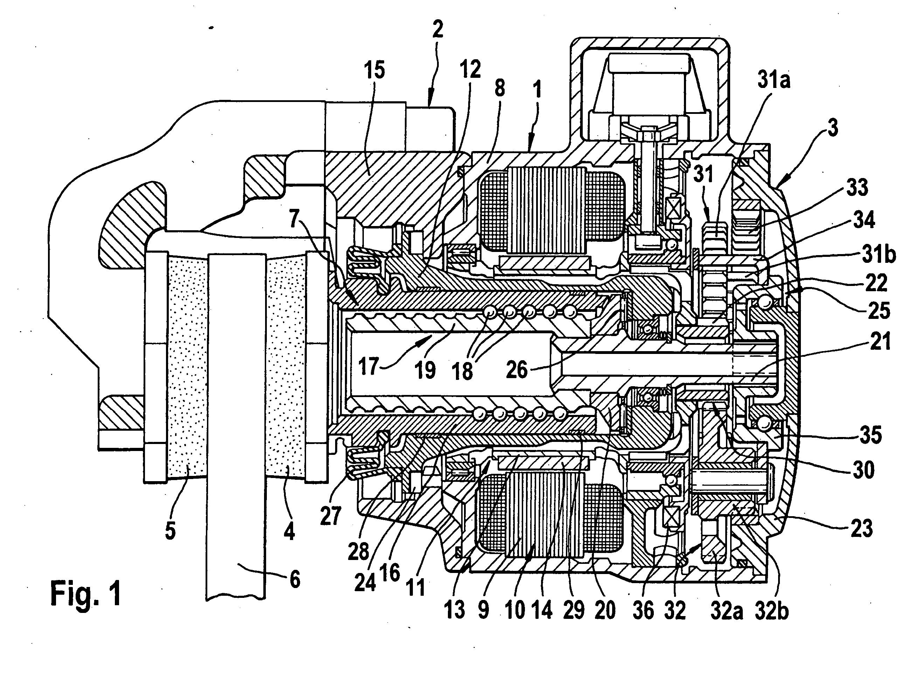

Die in Fig. 1 der Zeichnung dargestellte, elektromechanische Betätigungseinheit nach der Erfindung dient der Betätigung einer Schwimmsattel-Scheibenbremse, deren lediglich schematisch angedeuteter Bremssattel in einem nicht gezeigten feststehenden Halter verschiebbar gelagert ist. Ein Paar von Reibbelägen 4 und 5 ist im Bremssattel derart angeordnet, dass sie der linken und der rechten Seitenfläche einer Bremsscheibe 6 zugewandt sind.

Nachstehend wird der in der Zeichnung rechts gezeigte Reibbelag 4 als erster Reibbelag und der andere, mit 5 bezeichnete Reibbelag als zweiter Reibbelag bezeichnet. Während der erste Reibbelag 4 mittels eines Betätigungselements 7 durch die Betätigungseinheit direkt mit der Bremsscheibe 6 in Eingriff bringbar ist, wird der zweite Reibbelag 5 durch die Wirkung einer bei der Betätigung der Anordnung vom Bremssattel aufgebrachten Reaktionskraft gegen die gegenüberliegende Seitenfläche der Bremsscheibe 6 gedrückt. Die erfindungsgemäße Betätigungseinheit, die mittels nicht gezeigter Befestigungsmittel am Bremssattel angebracht ist, weist einen modularen Aufbau auf und besteht im wesentlichen aus drei selbständig handhabbaren Baugruppen bzw. Modulen, und zwar aus einer Antriebseinheit 1, einem den ersten Reibbelag 4 betätigenden ersten Untersetzungsgetriebe 2 und einem zwischen der Antriebseinheit 1 und dem ersten Untersetzungsgetriebe 2 wirkungsmäßig geschalteten zweiten Untersetzungsgetriebe 3.

Die vorhin erwähnte Antriebseinheit 1 besteht aus einem Elektromotor 10, der im dargestellten Beispiel als ein permanentmagneterregter, elektronisch kommutierter Motor ausgebildet ist, dessen Stator 9 unbeweglich in einem Motorgehäuse 8 angeordnet ist und dessen Rotor 11 durch einen ringförmigen Träger 13 gebildet ist, der mehrere Permanentmagnetsegmente 14 trägt. Zwischen dem Elektromotor 10 und dem vorhin erwähnten Betätigungselement 7 ist wirkungsmäßig das erste Untersetzungsgetriebe 2 angeordnet, das im gezeigten Beispiel als ein Kugelgewindetrieb 16 bis 21 ausgebildet ist, das in einem Getriebegehäuse 15 gelagert ist, das auch einteilig mit dem vorhin erwähnten Bremssattel ausgeführt sein kann. Der Kugelgewindetrieb besteht dabei aus einer Gewindemutter 16 sowie einer Gewindespindel 17, wobei zwischen der Gewindemutter 16 und der Gewindespindel 17 mehrere Kugeln 18 angeordnet sind, die bei einer Rotationsbewegung der Gewindespindel 17 umlaufen und die Gewindemutter 16 in eine axiale bzw. translatorische Bewegung versetzen. Die Gewindemutter 16 bildet dabei vorzugsweise das vorhin erwähnte Betätigungselement 7. Die vom Elektromotor 10 über das zweite Untersetzungsgetriebe 3 angetriebene Gewindespindel 17 ist dabei vorzugsweise dreiteilig ausgebildet und besteht aus einem mit der Gewindemutter 16 mittels der vorhin erwähnten Kugeln 18 im Eingriff stehenden, rohrförmigen ersten Spindelteil 19, einem ringförmigen zweiten Spindelteil 20 sowie einem dritten Spindelteil 21.

Die Anordnung ist dabei vorzugsweise derart getroffen, dass der Rotor 11 des Motors 10 unter Zwischenschaltung des zweiten Untersetzungsgetriebes 3 das dritte Spindelteil 21 antreibt, während die Gewindemutter 16 sich am ersten Reibbelag 4 abstützt.

Eine Reduzierung des erforderlichen Motormoments wird bei der in der Zeichnung dargestellten Ausführung der Erfindung durch zweckmäßige Integration eines Planetengetriebes 30 - 34 erreicht, das das vorhin erwähnte zweite Untersetzungsgetriebe 3 bildet. Das Planetengetriebe, das wirkungsmäßig zwischen dem Rotor 11 und der Gewindespindel 17 angeordnet ist, besteht aus einem Sonnenrad 30, das vorzugsweise durch einen am Rotor 11 ausgebildeten, außen verzahnten Bereich 22 gebildet ist, mehreren gestuften Planetenrädern, von denen zwei dargestellt und mit den Bezugszeichen 31 und 32 versehen sind, sowie einem Hohlrad 33. Die gestuften Planetenräder 31, 32, die in einem Planetenkäfig 34 gelagert sind, weisen eine mit dem Sonnenrad 30 zusammenwirkende erste Stufe sowie eine mit dem Hohlrad 33 zusammenwirkende zweite Stufe auf, wobei die erste Stufe durch Zahnräder 31a, 32a größeren Durchmessers und die zweite Stufe durch Zahnräder 31b, 32b kleineren Durchmessers gebildet sind. Der vorhin erwähnte Planetenkäfig 34 ist dabei vorzugsweise derart ausgeführt, dass sein zwischen den Lagerstellen der Planetenräder 31, 32 und der Ankopplungsstelle der Gewindespindel 17 liegender Bereich sowohl ein geringes axiales als auch radiales Spiel sowie einen geringen Winkelversatz zulässt und beispielsweise als eine Lamellenscheibe oder ein Faltenbalg ausgebildet ist. Das Hohlrad 33 wird durch einen innenverzahnten Bereich eines das Gehäuse des Planetengetriebes bildenden Deckels 23 gebildet.

Die vorhin erwähnte Gewindemutter 16 des Kugelgewindetriebs ist in einem topfförmigen Führungsteil 12 geführt bzw. gelagert. Die Lagerung der Gewindemutter 16 im Führungsteil 12 erfolgt sowohl in ihrem dem ersten Reibbelag 4 zugewandten Bereich mittels eines im Führungsteil 12 angeordneten ersten Gleitringes 28 als auch in ihrem dem Reibbelag 4 abgewandten Endbereich mittels eines auf der Gewindemutter 16 angeordneten zweiten Gleitringes 29.

Weiterhin ist Fig. 1 zu entnehmen, dass das zweite ringförmige Spindelteil 20 sich an einem innerhalb des Führungsteils 12 angeordneten Axiallager 26 abstützt, während das dritte Spindelteil 21 mittels einer formschlüssigen Steckverbindung mit dem Planetenkäfig 34 des zweiten Untersetzungsgetriebes 3 verbunden ist.
Zu diesem Zweck ist das Ende des dritten Spindelteiles 21 beispielsweise als eine Torx-Verbindung oder ein Sechskant ausgebildet, der in eine entsprechend geformte Öffnung im Planetenkäfig 34 hineingeschoben wird. Dabei ist es besonders vorteilhaft, wenn die formschlüssige Steckverbindung torsionssteif, radial nachgiebig und biegeweich an den Planetenkäfig 34 angekoppelt ist. Die Ankopplung erfolgt mittels eines Außenringes 35 eines im Deckel 23 vorgesehenen Radiallagers 25. Eine zwischen der Gewindemutter 16 und dem Führungsteil 12 eingespannte elastische Dichtung bzw. Dichtmanschette 27 verhindert ein Eindringen von Verunreinigungen ins Innere des Kugelgewindetriebs.

Außerdem ist es für eine einwandfreie Funktion der erfindungsgemäßen Betätigungseinheit sinnvoll, wenn die Gewindemutter 16 an ihrem dem Reibbelag 4 abgewandten Ende mit einem nicht gezeigten axialen Vorsprung versehen ist, der bei ihrem Zurückstellen mit einem am Umfang des zweiten Spindelteiles 20 ausgebildeten Anschlag zusammenwirkt. Durch Abstützen einer Seitenfläche des Vorsprungs am Anschlag wird ein weiteres Zurückstellen der Gewindemutter 16 wirksam verhindert, so dass kein Verklemmen der beiden Teile 16, 20 eintreten kann.

Um die aktuelle Position des Rotors 11 zu ermitteln ist ein nicht näher dargestelltes Lageerkennungssystem 36 vorgesehen. Die Lageinformation wird dann mittels eines Hallsensors oder eines magnetoresistiven Elements ermittelt.

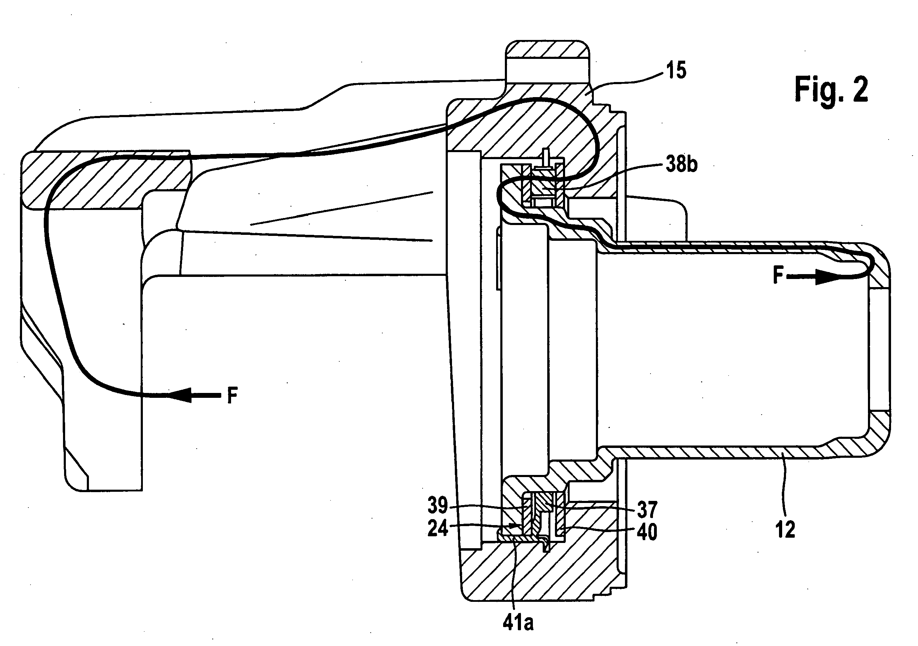

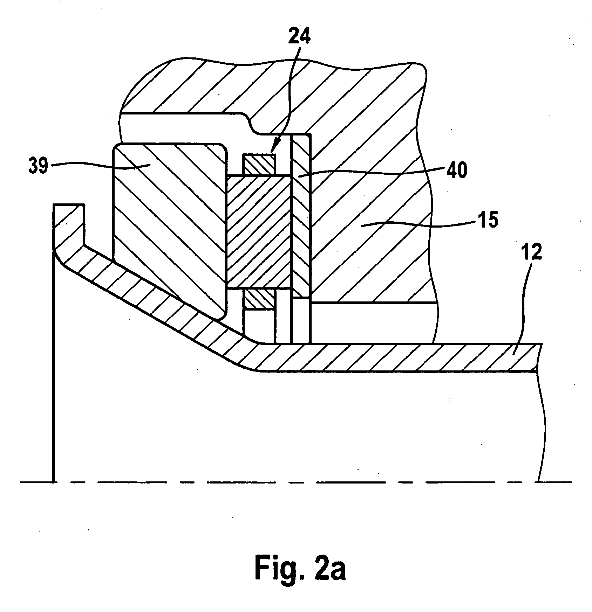

Um schließlich die vorhin erwähnte, aus der von der Antriebseinheit 1 aufgebrachten Betätigungskraft resultierende Reaktionskraft F (Fig. 2) zu ermitteln ist zwischen dem Führungsteil 12 und dem Getriebegehäuse 15 eine lediglich schematisch angedeutete Sensoreinrichtung bzw. ein Kraftsensor vorgesehen, der mit dem Bezugszeichen 24 versehen ist. Das Ausgangssignal des Kraftsensors 24 wird als Eingangsgröße einem nicht dargestellten elektronischen Regler zugeführt.

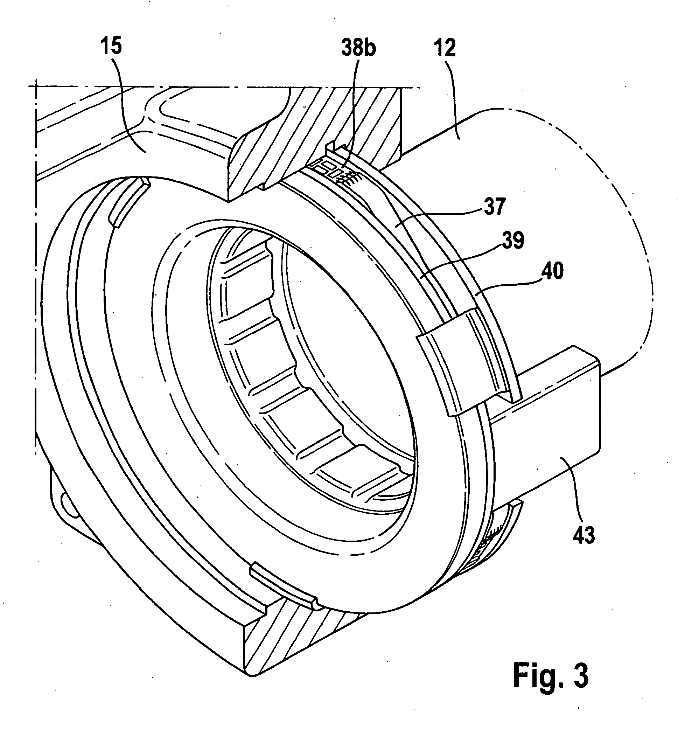

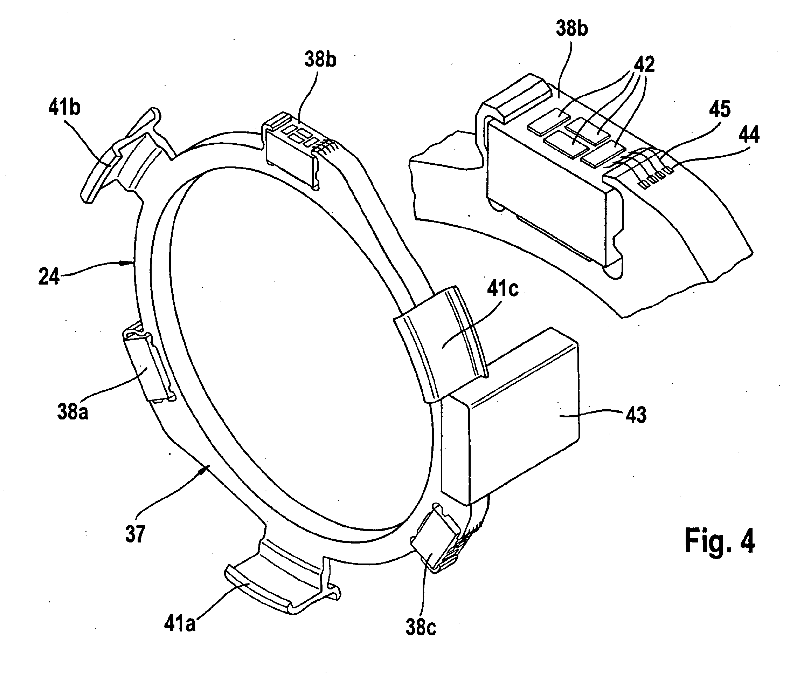

Wie insbesondere Fig. 2 bis 4 zu entnehmen ist, besteht der vorhin erwähnte Kraftsensor 24 aus einem vorzugsweise aus Kunststoff gefertigten Halter 37 sowie drei auf seinem Umfang vorzugsweise um jeweils 120° versetzt angeordneten Druckmesselementen 38a,b,c. In dem in Fig. 2, 3 dargestellten eingebauten Zustand des Kraftsensors 24 ist dieser zwischen zwei Druckringen 39, 40 derart angeordnet, dass an dem erstgenannten Druckring 39 ein radialer Kragen oder eine Konusfläche (s. Fig. 2a) des Führungsteiles 12 zur Anlage kommt, während der zweitgenannte Druckring 40 am Getriebegehäuse 15 axial abgestützt ist. Außerdem weist der Halter 37 zwischen den Druckmesselementen 38a-c angeformte Einrast- und Führungsmittel 41a-c auf, die einerseits eine formschlüssige Verbindung des Kraftsensors 24 mit dem Führungsteil 12 und andererseits seine Zentrierung und Fixierung in dem Getriebegehäuse 15 sicher stellen. Die Druckmesselemente 38a-c sind vorzugsweise quaderförmig ausgebildet und weisen jeweils vier Dehnungsmessflächen 42 auf, die auf der Oberfläche der Druckmesselemente 38a-c in einer Ebene ausgebildet sind, die senkrecht zur Richtung der Krafteinleitung in den Sensor 24 verläuft. Um ein qualitativ hochwertiges Sensorsignal zu erzeugen sind die Dehnungsmessflächen 42 in einer Vollbrücke geschaltet. Darüber hinaus ist in dem Kunststoffmaterial des Halters 37 ein Stanzgitter 44 eingebettet, das der Kontaktierung der Dehnungsmessflächen 42 mittels Dünndrahtbonden 45 dient. Der elektrische Anschluss des Kraftsensors 24 erfolgt mittels eines am Halter 37 angespritzten Steckers 43, in dem eine nicht dargestellte Auswerteelektronik integriert sein kann.

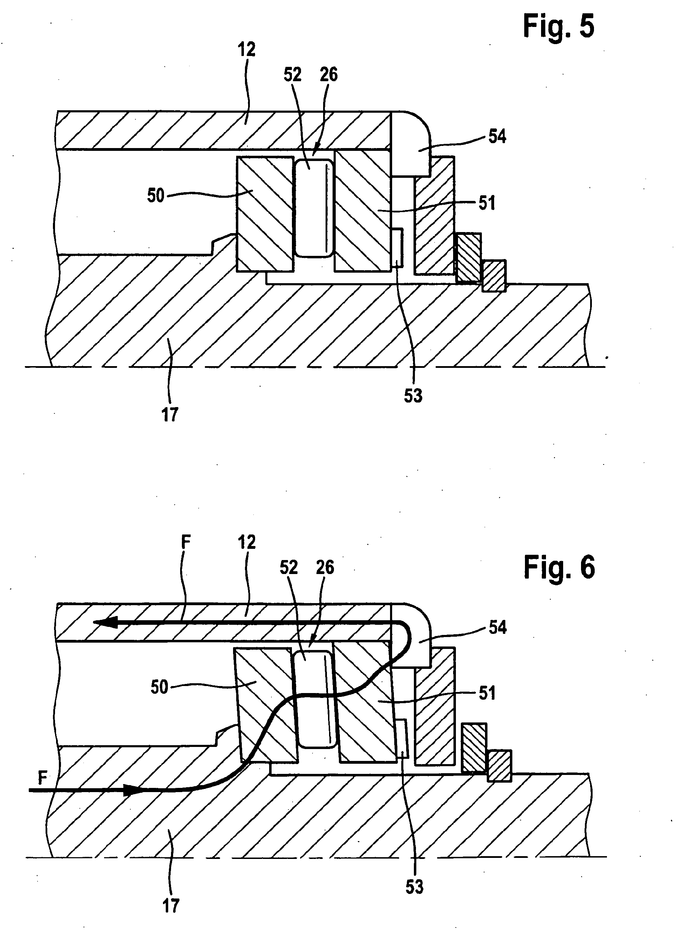

Bei der in Fig. 5 und 6 dargestellten zweiten Ausführung der Erfindung ist die vorhin erwähnte Sensoreinrichtung 24 im Bereich des Axiallagers 26 im Führungsteil 12 angeordnet. Das Axiallager 26 besteht im wesentlichen aus einem ersten Lagerring 50, einem sich am Führungsteil 12 abstützenden zweiten Lagerring 51 sowie zwischen den beiden Lagerringen 50, 51 angeordneten Rollkörpern 52. Auf dem zweiten Lagerring 51, der einen Bestandteil der Sensoreinrichtung 24 bildet, ist ein lediglich schematisch angedeutetes Sensorelement 53 angeordnet, das die unter Belastung auftretende Verformung des zweiten Lagerringes 51 bzw. sein "Auftellern" erfasst (Fig. 6). Die Übertragung der bei der Betätigung entstehenden Reaktionskraft zwischen der Spindel 17 und dem Führungsteil 12 ist durch Pfeile F angedeutet. Eine Aussparung 54 im Führungsteil 12 ermöglicht eine Kontaktierung des Sensorelementes 53 durch nicht gezeigte elektrische Leitungen.

### Bezugszeichenliste

- 1: Antriebseinheit
- 2: Untersetzungsgetriebe
- 3: Untersetzungsgetriebe
- 4: Reibbelag
- 5: Reibbelag
- 6: Bremsscheibe
- 7: Betätigungselement
- 8: Motorgehäuse
- 9: Stator
- 10: Elektromotor
- 11: Rotor
- 12: Führungsteil
- 13: Träger
- 14: Permanentmagnetsegment
- 15: Getriebegehäuse
- 16: Gewindemutter
- 17: Gewindespindel
- 18: Kugel
- 19: Spindelteil
- 20: Spindelteil
- 21: Spindelteil
- 22: Bereich
- 23: Deckel
- 24: Kraftsensor
- 25: Radiallager
- 26: Axiallager
- 27: Dichtung
- 28: Gleitring
- 29: Gleitring
- 30: Sonnenrad
- 31: Planetenrad
- 31a: Planetenrad
- 31b: Planetenrad
- 32: Planetenrad
- 32a: Planetenrad
- 32b: Planetenrad
- 33: Hohlrad
- 34: Planetenkäfig
- 35: Außenring
- 36: Lageerkennungssystem
- 37: Haltering
- 38a-c: Druckmesselement
- 39: Druckring
- 40: Druckring
- 41a-d: Einrast- und Führungsmittel
- 42: Dehnungsmessfläche
- 43: Stecker
- 44: Stanzgitter
- 45: Dünndrahtbonden

- 50: Lagerring
- 51: Lagerring
- 52: Rollkörper
- 53: Sensorelement
- 54: Aussparung

## Patentansprüche

1. Betätigungseinheit für eine elektromechanisch betätigbare Scheibenbremse für Kraftfahrzeuge, die an einem Bremssattel angeordnet ist, in dem zwei mit je einer Seitenfläche einer Bremsscheibe (6) zusammenwirkende Reibbeläge (4,5) begrenzt verschiebbar angeordnet sind, wobei einer (4) der Reibbeläge (4,5) mittels eines Betätigungselementes (15) durch die Betätigungseinheit direkt und der andere Reibbelag (5) durch die Wirkung einer vom Bremssattel aufgebrachten Reaktionskraft mit der Bremsscheibe (6) in Eingriff bringbar ist, wobei die Betätigungseinheit aus einem Elektromotor (10) sowie einem wirkungsmäßig zwischen dem Elektromotor (10) und dem Betätigungselement (15) angeordneten Untersetzungsgetriebe (2) besteht, das durch einen Gewindetrieb gebildet ist, der von einem sich am Bremssattel oder einem mit dem Bremssattel verbundenen Getriebegehäuse (2) axial abstützenden Führungsteil (12) aufgenommen wird, **dadurch gekennzeichnet, dass** zwischen dem Führungsteil (12) und dem Bremssattel bzw. dem mit dem Bremssattel verbundenen Getriebegehäuse (2) eine Sensoreinrichtung (24) zur Erfassung der aus der von der Betätigungseinheit (10,2) aufgebrachten Betätigungskraft resultierenden Reaktionskraft vorgesehen ist, wobei die Sensoreinrichtung (24) einerseits mit dem Getriebegehäuse (2) und andererseits mit dem Führungsteil (12) formschlüssig derart verbunden ist, dass eine axiale Sicherung der Sensoreinrichtung im Getriebegehäuse (2) erfolgt und wobei die Sensoreinrichtung (24) Mittel (41a-c) zur radialen Führung des Führungsteiles (12) aufweist.

2. Betätigungseinheit nach Anspruch 1, **dadurch gekennzeichnet, dass** die Sensoreinrichtung (24) durch einen ringförmigen Halter (37) gebildet ist, an dessen Umfang drei Druckmesselemente (38a-c) verteilt angeordnet sind.

3. Betätigungseinheit nach Anspruch 2, **dadurch gekennzeichnet, dass** der ringförmige Halter (37) aus Kunststoff besteht.

4. Betätigungseinheit nach Anspruch 2 oder 3, **dadurch gekennzeichnet, dass** die Druckmesselemente (38a-c) quaderförmig ausgeführt sind und Dehnungsmessflächen (42) aufweisen, die in einer zur Richtung der Reaktionskrafteinleitung senkrecht verlaufenden Ebene angeordnet sind.

5. Betätigungseinheit nach Anspruch 3, **dadurch gekennzeichnet, dass** der ringförmige Halter (37) Kontaktierungsmittel (44) zur Kontaktierung der Dehnungsmessflächen (42) aufweist.

6. Betätigungseinheit nach Anspruch 4, **dadurch gekennzeichnet, dass** die Kontaktierungsmittel (44) durch ein vom Kunststoff umspritztes Stanzgitter gebildet sind, das eine Übertragung elektrischer Signale ermöglicht und das durch Dünndrahtbonden (45) mit den Dehnungsmessflächen (42) verbunden ist.

7. Betätigungseinheit nach einem der Ansprüche 2 bis 6, **dadurch gekennzeichnet, dass** der ringförmige Halter (37) mit einem elektrischen Stecker (43) zum Anschließen der Dehnungsmessflächen (42) versehen ist.

8. Betätigungseinheit nach Anspruch 7, **dadurch gekennzeichnet, dass** der elektrische Stecker (43) eine Auswerteelektronik umfasst.

9. Betätigungseinheit nach einem der Ansprüche 4 bis 8, **dadurch gekennzeichnet, dass** die Dehnungsmessflächen (42) in einer Vollbrücke geschaltet sind.

## Claims

1. Actuation unit for an electromechanically actuated disc brake for motor vehicles, which is arranged on a brake calliper and in which two friction linings (4, 5) which each interact with one side face of a brake disc (6) are arranged so as to be displaceable to a limited degree, wherein one (4) of the friction linings (4, 5) can be engaged with the brake disc (6) directly by means of an actuation element (15), by the actuation unit, and the other friction lining (5) can be engaged with the brake disc (6) by the effect of a reaction force which is applied by the brake calliper, wherein the actuation unit is composed of an electric motor (10) and a step-down gear mechanism (2) which is operatively arranged between the electric motor (10) and the actuation element (15) and is formed by a threaded drive mechanism which is held by a guide part (12) which is supported axially on the brake calliper or a transmission housing (2) which is connected to the brake calliper, **characterized in that** a sensor device (24) for sensing the reaction force which results from the actuation force applied by the actuation unit (10, 2) is provided between the guide part (12) and the brake calliper or the transmission housing (2) which is connected to the brake calliper, wherein the sensor device (24) is connected in a positively locking fashion both to the transmission housing (2) and to the guide part (12) in such a way that the sensor device is secured axially in the transmission housing (2), and wherein the sensor device (24) has means (41a-c) for radially guiding the guide part (12).

2. Actuation unit according to Claim 1, **characterized in that** the sensor device (24) is formed by an annular holder (37) on whose circumference three pressure measuring elements (38a-c) are arranged in a distributed fashion.

3. Actuation unit according to Claim 2, **characterized in that** the annular holder (37) is composed of plastic.

4. Actuation unit according to Claim 2 or 3, **characterized in that** the pressure measuring elements (38a-c) are embodied in the form of a right parallelepiped and have strain gauge faces (42) which are arranged in a plane which extends perpendicularly with respect to the direction of the application of reaction force.

5. Actuation unit according to Claim 3, **characterized in that** the annular holder (37) has contacting means (44) for making contact with the strain gauge faces (42).

6. Actuation unit according to Claim 4, **characterized in that** the contacting means (44) are formed by a punched grill which is encapsulated by injection moulding with plastic, which permits electrical signals to be transmitted and which is connected to the strain gauge faces (42) by thin wire bonds (45).

7. Actuation unit according to one of Claims 2 to 6, **characterized in that** the annular holder (37) is provided with an electrical plug (43) for connecting the strain gauge faces (42).

8. Actuation unit according to Claim 7, **characterized in that** the electrical plug (43) comprises an electronic evaluation system.

9. Actuation unit according to one of Claims 4 to 8, **characterized in that** the strain gauge faces (42) are connected in a full bridge.

## Revendications

1. Unité d'actionnement pour un frein à disque à actionnement électromagnétique pour véhicules automobiles, disposée sur un étrier de frein dans lequel deux garnitures de friction (4, 5) qui coopèrent chacune avec une surface latérale respective d'un disque de frein (6) sont disposées de manière à pouvoir coulisser de manière limitée,
l'une (4) des garnitures de friction (4, 5) pouvant être engagée directement sur le disque de frein (6) par l'unité d'actionnement au moyen d'un élément d'actionnement (15) et l'autre garniture de friction (5) pouvant être engagée sur le disque de frein par l'effet d'une force de réaction exercée par l'étrier de frein,
l'unité d'actionnement étant constituée d'un moteur électrique (10) ainsi que d'une transmission d'assistance (2) disposée entre le moteur électrique (10) et l'élément d'actionnement (15) et formée par une tige filetée de commande logée dans une pièce de guidage (12) qui s'appuie axialement sur l'étrier de frein ou sur un boîtier de transmission (2) relié à l'étrier de frein,
**caractérisée en ce que**
un dispositif de détection (24) qui détecte la force de réaction qui résulte de la force d'actionnement appliquée par l'unité d'actionnement (10, 2) est prévue entre la pièce de guidage (12) et l'étrier de frein ou le boîtier de transmission (2) relié à l'étrier de frein,
le dispositif de détection (24) étant relié en correspondance géométrique d'une part au boîtier de transmission (2) et d'autre part à la pièce de guidage (12) de manière à obtenir un blocage axial du dispositif de détection dans le boîtier de transmission (2) et
**en ce que** le dispositif de détection (24) représente des moyens (41a-c) de guidage radial de la pièce de guidage (12).

2. Unité d'actionnement selon la revendication 1, **caractérisée en ce que** le dispositif de détection (24) est formé par un support (37) de forme annulaire à la périphérie duquel trois éléments de mesure de pression (38a à 38c) sont répartis.

3. Unité d'actionnement selon la revendication 2, **caractérisée en ce que** le support (37) de forme annulaire est réalisée en matière synthétique.

4. Unité d'actionnement selon les revendications 2 ou 3, **caractérisée en ce que** les éléments de mesure de pression (38a à 38c) ont une forme parallélépipédique et présentent des surfaces (42) de mesure d'allongement qui sont disposées dans un plan qui s'étend perpendiculairement à la direction de l'action de la force de réaction.

5. Unité d'actionnement selon la revendication 3, **caractérisée en ce que** le support (37) de forme annulaire présente des moyens (44) de mise en contact qui assurent le contact avec les surfaces (42) de mesure d'allongement.

6. Unité d'actionnement selon la revendication 4, **caractérisée en ce que** les moyens (44) de mise en contact sont formés par une grille estampée qui est englobée dans de la matière synthétique, qui permet la transmission de signaux électriques et qui est reliée aux surfaces (42) de mesure d'allongement par des liaisons (45) en fil mince.

7. Unité d'actionnement selon l'une des revendications 2 à 6, **caractérisée en ce que** le support (37) de forme annulaire est doté d'une fiche électrique (43) qui permet le raccordement des surfaces (42) de mesure d'allongement.

8. Unité d'actionnement selon la revendication 7, **caractérisée en ce que** la fiche électrique (43) comprend une électronique d'évaluation.

9. Unité d'actionnement selon l'une des revendications 4 à 8, **caractérisée en ce que** les surfaces (42) de mesure d'allongement sont raccordées en pont complet.
